# EUROPÄISCHE PATENTSCHRIFT

(11) **EP 2 926 643 B1**
(45) Veröffentlichungstag und Bekanntmachung des Hinweises auf die Patenterteilung: **14.12.2016**
(21) Anmeldenummer: 15158163.4
(22) Anmeldetag: 09.03.2015
(51) Int. Cl.: A01D 34/66, A01D 75/18

(54) **Landwirtschaftliche Maschine**
Agricultural machine
Machine agricole

(30) Priorität: 31.03.2014 DE 202014002808 U
(43) Veröffentlichungstag der Anmeldung: 07.10.2015
(73) Patentinhaber: PÖTTINGER Landtechnik GmbH, 4710 Grieskirchen (AT)
(72) Erfinder: Gadermayr, Andreas, Ing., 4751 Dorf an der Pram (AT); Detzlhofer, Christoph, DI (FH), 4720 Kallham (AT)
(74) Vertreter: Thoma, Michael

(56) Entgegenhaltungen:
- EP-A1- 0 945 051
- EP-A1- 1 925 198
- EP-A2- 1 266 551
- DE-U1-202010 011 803

## Beschreibung

Die vorliegende Erfindung betrifft eine landwirtschaftliche Maschine, vorzugsweise in Form eines Anbaugeräts wie Mähwerk oder Heuwerbungsmaschine zum Anbau an einen Schlepper, mit zumindest einem Arbeitsaggregat, das an einem Tragarm gelagert ist, der um eine liegende Tragarmschwenkachse schwenkbar ist, so daß das Arbeitsaggregat aus einer abgesenkten Arbeitsstellung in eine angehobene Vorgewende- und/oder Transportstellung bringbar ist, sowie einer Anfahrsicherung, mittels derer das Arbeitsaggregat bei Anfahren an ein Hindernis in Fahrtrichtung betrachtet nach hinten und/oder nach oben in eine Ausweichstellung beweglich ist, wobei die Anfahrsicherung eine bewegliche Lagerung der Tragarmschwenkachse und zumindest ein Sicherungselement zum Halten des Tragarms in der Arbeitsstellung und/oder Sperren der Bewegung in die Ausweichstellung bei hindernisfreiem Normalbetrieb aufweist.

Bei Landmaschinen wie Mähwerken fahren die Arbeitsaggregate mit oftmals beachtlicher Geschwindigkeit in nur geringer Höhe über den Boden, so dass selbst durch vorausschauende, intelligente Kollisionsschutzvorrichtungen nicht immer verhindert werden kann, dass das Arbeitsaggregat doch auf ein Hinternis auffährt, beispielsweise an einem Erdhügel hängenbleibt oder am Feldrand an Begrenzungspfosten anstößt. Um bei derartigen Kollisionen mit Hindernissen zu verhindern, dass größere Beschädigungen an der Maschine auftreten, sind Anfahrsicherungen in die Geräte eingebaut, die für das Arbeitsaggregat eine zusätzliche Bewegungsachse vorsehen oder eine vorhandene Bewegungsachse nutzen, so dass bei Anfahren an ein Hindernis das Arbeitsaggregat in Fahrtrichtung betrachtet nach hinten und/oder nach oben ausweichen kann. Selbstverständlich muss dabei verhindert werden, dass eine solche Ausweichbewegung zu früh oder unbeabsichtigt eintritt. Bisweilen treten nämlich auch aufgrund anderer Fahrsituationen wie Schlaglöchern in Kurvenfahrten etc. Beschleunigungen an den Arbeitsaggregaten auf, die ansonsten ein unbeabsichtigtes Ausweichen des Arbeitsaggregates aus der vorbestimmten Arbeitsstellung mit sich bringen können, auch wenn eine Kollision mit einem Hindernis gar nicht erfolgt ist.

Hierbei wurde bereits vorgeschlagen, die Anfahrsicherung mit Anfahrsicherungszylindern versehen, die die genannte Bewegungsachse und damit die Bewegung in die Anfahrstellung sperren bzw. das Arbeitsaggregat in der vorgesehen Arbeitsstellung halten, bis durch Auffahren auf ein Hindernis tatsächlich eine Belastung eintritt, die ein Wegbewegen des Arbeitsaggregatsin die Ausweichstellung rechtfertigt. Derartige Hydraulikzylinder werden dabei druckgesteuert betrieben, so dass sie erst bei entsprechender Belastung, die mit einem entsprechenden Druck im Zylinder einhergeht, eine Längenveränderung des Druckzylinders und damit die Ausweichbewegung zulassen. Vorteilhaft an derartigen Anfahrsicherungen mit Druckzylindern ist die Rückstellbarkeit nach Anfahren an ein Hindernis. Hierzu braucht lediglich die Druckkammer des Anfahrsicherungszylinders entsprechend beaufschlagt werden, um das Arbeitsaggregat wieder zurück in seine bestimmungsgemäße Arbeitsposition zu bringen.

Die EP 19 25 198 zeigt eine Mähmaschine, deren Mähaggregat um eine liegende Schwenkachse mittels eines Hubzylinders nach oben geschwenkt werden kann, und weiterhin um eine aufrechte Schwenkachse bei Auffahren auf Hindernisse nach hinten wegschwenken kann, wobei diese Anfahrsicherungs-Schwenkachse durch einen Hydraulikzylinder bis zu einem vorbestimmten Druck gesperrt ist. Der Anfahrsicherungszylinder soll mit einem Gewichtsentlastungs-Zylinder gekoppelt sein, um beim Anfahren an ein Hindernis eine vergrößerte Gewichtsentlastung zu erzielen.

Die US 5,566,537 zeigt eine Mähmaschine, deren Mähwerk an einem seitlich auskragenden Tragarm aufgehängt ist, wobei der genannte Tragarm um eine aufrechte Achse zurückgeschwenkt und um eine liegende, in Fahrtrichtung weisende Achse nach oben geschwenkt werden kann. Bezüglich der aufrechten Achse ist der Tragarm mit einem Anfahrsicherungszylinder beaufschlagt, der aus einem Druckspeicher vorgespannt ist. Der besagte Anfahrzylinder ist hierbei an dem Tragarm oberhalb dessen liegender Schwenkachse angelenkt, so dass die Vorspannung des Anfahrzylinders gleichzeitig eine Gewichtsentlastung des Mähwerks bewirkt.

Weiterhin zeigt die EP 0 512 602 eine Mähmaschine, dessen Mähewerk an einem Tragarm aufgehängt ist, der um eine aufrechte Achse zurückgeschwenkt werden kann. Der besagte Tragarm ist wiederum an einem weiteren Tragarm befestigt, der ebenfalls um eine aufrechte Achse gegenüber dem Anbaubock zurückgeschwenkt werden kann. Beide Tragarme sind hierbei bezüglich ihrer jeweiligen aufrechten Schwenkachse durch einen Hydraulikzylinder beaufschlagt, die parallel geschaltet sind und aus einem Druckspeicher vorgespannt sind, um das Mähwerk in der Arbeitsposition zu halten.

Weitere Anbaugeräte mit ähnlichen Arbeitsaggregat-Aufhängungen sind aus den Schriften EP 12 66 551 A2, EP 0 945 051 A1 und DE 20 2010 011 803 U1 bekannt.

Die Aufhängung der Tragarme solcher landwirtschaftlichen Maschinen ist aufgrund der geforderten mehrachsigen Beweglichkeit jedoch relativ kompliziert. Einerseits sollen die Tragarme nach oben schwenkbar sein, um die daran gelagerten Arbeitsaggregate in die Vorgewende- bzw. Transportstellung verbringen zu können. Andererseits sollen die Tragarme für die Anfahrsicherung nach hinten schwenken können, um beim Anfahren an ein Hindernis ausweichen zu können. Durch die mehreren Schwenkachsen entsteht bei Verschleiß relativ schnell Lagerspiel. Zum anderen wird die Tragarmaufhängung schwer und platzgreifend, wobei der Bauraum insbesondere dort beeinträchtigt wird, wo er oft auch für den mechanischen Antriebsstrang zum Antreiben der Arbeitsaggregate benötigt wird.

Hier will die vorliegende Erfindung Abhilfe schaffen. Ihr liegt die Aufgabe zugrunde, eine verbesserte landwirtschaftliche Maschine der genannten Art. Insbesondere soll eine verbesserte Tragarmaufhängung geschaffen werden, die bei einfachem und platzsparendem Aufbau die mehrachsige Beweglichkeit des Tragarms zum Ausheben des Arbeitsaggregats in die Vorgewende- und Transportstellung und zum Ausweichen vor Hindernissen ermöglicht.

Erfindungsgemäß wird diese Aufgabe durch eine Landmaschine gemäß Anspruch 1 gelöst. Bevorzugte Ausgestaltungen der Erfindung sind Gegenstand der abhängigen Ansprüche.

Es wird also vorgeschlagen, die Tragarmschwenkachse, um die der Tragarm nach oben in die Vorgewende- und/oder Transportstellung geschwenkt werden kann, an einem Lagerpunkt mehrachsig beweglich abzustützen und an einem anderen Lagerpunkt mittels beweglicher Lenker zu halten, um die Bewegung bezüglich des mehrachsigen anderen Lagerpunkts zu steuern. Erfindungsgemäß umfasst die bewegliche Lagerung der Tragarmschwenkachse ein Kugelgelenk, an dem die Tragarmschwenkachse räumlich frei beweglich gelagert ist, und eine vom Kugelgelenk beabstandete Lenkeranordnung, die die Bewegung der Tragarmschwenkachse um das Kugelgelenk steuert. Die Anfahrsicherung kann hierbei in einfacher Weise in die genannte Lenkeranordnung integriert sein, sodass die Anfahrsicherung kein zusätzliches Ergänzungsbauteil, sondern ein integriertes Strukturteil der Tragarmaufhängung bildet. Durch die Verwendung des Kugelgelenks kommt die Tragarmaufhängung mit weniger Lagerbauteilen aus, zudem wird die gelenkige Aufhängung des Tragarms platzsparender und leichter.

Die genannte Lenkeranordnung kann hierbei in vorteilhafter Weiterbildung der Erfindung insbesondere nach Art eines Zweischlags aufgebaut sein und zumindest zwei Lenker umfassen, von denen zumindest einer längenveränderbar ausgebildet und/oder verschieblich angelenkt ist. Die genannten Lenker des Zweischlags können einerseits gelenkig an der Tragarmschwenkachse bzw. am Tragarm angelenkt sein und andererseits an einem Rahmenteil gelenkig angelenkt sein, an dem der Tragarm aufgehängt ist, wobei das genannte Rahmenteil starr am Hauptrahmen bzw. Chassis der Maschine befestigt oder ein integraler Bestandteil des genannten Hauptrahmens oder Chassis sein kann. Die Anlenkpunkte der beiden Lenker an dem genannten Rahmenteil sind hierbei vorteilhafterweise weiter voneinander beabstandet als die Anlenkpunkte der Lenker am Tragarm. Vorteilhafterweise können die beiden Lenker näherungsweise eine v-förmige Lenkeranordnung bilden und/oder zum Tragarm hin zusammenlaufen.

Die beiden Lenker müssen dabei an dem Tragarm nicht zwangsweise einen gemeinsamen Angriffspunkt haben bzw. keine co-achsiale Gelenkachse besitzen, sondern können am Tragarm auch voneinander beabstandete Anlenkpunkte haben, um die Ausweichbewegungen des Tragarms in verschiedener Weise steuern zu können. Vorteilhafterweise können die genannten Lenker jedoch am Tragarm an einer gemeinsamen Gelenkachse angelenkt sein, wobei die genannte Gelenkachse insbesondere so ausgerichtet sein kann, dass sie durch das Kugelgelenk hindurch verläuft. Der Angriffspunkt bzw. die Angriffspunkte der beiden Lenker sind dabei von dem genannten Kugelgelenk ausreichend weit beabstandet, um die Tragarmschwenkachse sicher halten zu können.

Die Beweglichkeit der Tragarmschwenkachse um das Kugelgelenk kann vorteilhafterweise durch Längenveränderbarkeit zumindest eines der Lenker und/oder durch Verschiebbarkeit des Anlenkpunktes zumindest eines Lenkers gesteuert werden. Behalten beide Lenker ihre Länge und sind deren Anlenkpunkte fest fixiert, kann sich die Tragarmschwenkachse nicht um das Kugelgelenk bewegen und dementsprechend kann der Tragarm nur um die fixierte Tragarmschwenkachse nach oben schwenken, was dem Normalbetrieb entspricht und ein Anheben des Arbeitsaggregats in die Vorgewende- bzw. Transportstellung ermöglicht. Wird jedoch zumindest ein Lenker längenverändert oder einer der Anlenkpunkte der Lenkeranordnung verschoben, kann die Tragarmschwenkachse ihre Lage ändern, insbesondere um das Kugelgelenk verschwenken, wodurch die zusätzlich gewünschte Ausweichbewegung der Anfahrsicherung realisiert werden kann.

In vorteilhafter Weiterbildung der Erfindung kann zumindest ein längenveränderbarer Lenker in Form eines Druckmittelzylinders ausgebildet sein, der an einen Druckmittelkreis angeschlossen werden kann, um den Druckmittelzylinder vorzuspannen und/oder in einer bestimmten Stellung zu halten, insbesondere der unausgelenkten Normalbetriebsstellung, aus der der Druckmittelzylinder dann bei Anfahren an ein Hindernis unter Verdrängung von Druckmittel auslösen kann.

In Weiterbildung der Erfindung kann der Anfahrsicherungszylinder mittels eines Druckspeichers rückstellbar und/oder vorgespannt sein, der mit dem Anfahrsicherungszylinder derart gekoppelt ist, dass der Anfahrsicherungszylinder mit Druck aus dem Druckspeicher in seine die Anfahrsicherung sperrende Stellung vorgespannt ist. Mittels eines solchen Druckspeichers kann eine autarke Lösung für ein druckmittelgesteuertes und sich insbesondere auch von selbst rückstellendes Anfahrsicherungssystem geschaffen werden, das keinen separaten Druckmittelanschluss am Schlepper benötigt.

Vorteilhafterweise ist dem Druckspeicher dabei eine Druckeinstelleinrichtung zur Einstellung des Vorspanndruckes zugeordnet, so dass der vom Druckspeicher auf den Anfahrsicherungszylinder gegebene Druck an die Einsatzbedingungen und - anforderungen angepasst werden kann. Dabei kann zwischen dem Druckspeicher und dem Anfahrsicherungszylinder in Weiterbildung der Erfindung beispielsweise ein Manometer vorgesehen sein. Alternativ oder zusätzlich kann auch der Druckspeicher selbst mit einer Druckeinstelleinrichtung versehen sein.

Alternativ oder zusätzlich ist der Anfahrsicherungszylinder mit dem Aushubzylinder, mit dem der Tragarm und damit das Arbeitsaggregat in die Vorgewende- bzw. Transportstellung angehoben werden kann, gekoppelt derart, dass der Anfahrsicherungszylinder bei Anheben des Arbeitsaggregats in die genannte Vorgewende- und/oder Transportstellung von dem Aushubzylinder her druckbeaufschlagt ist. Es wird sozusagen der Aushubzylinder bzw. der Druck für den Aushubzylinder zum Ausheben des Arbeitsaggregats angezapft, um den Anfahrsicherungszylinder zyklisch rückzustellen bzw. vorzuspannen. Jedesmal wenn am Vorgewende das Arbeitsaggregat angehoben wird, wird der entsprechende Druck auch auf den Anfahrsicherungszylinder gegeben. Dies kann unmittelbar der Druck aus dem Aushubzylinder sein, es kann jedoch ggf. auch ein verminderter Druck sein, beispielsweise indem in die Verbindung zwischen Aushubzylinder und Anfahrsicherungszylinder ein entsprechendes Strömungssteuerelement vorgesehen wird, das einen entsprechenden Druckabfall bewirkt.

Um das Auslösen der Anfahrsicherung präzise zu steuern, kann in Weiterbildung der Erfindung vorteilhafterweise an dem Anfahrsicherungszylinder ein Ablauf vorgesehen, der mit einem druckgesteuerten Ventil nur bis zum Erreichen eines vorbestimmten Auslösedrucks verschlossen ist. Übersteigt der Druck im Anfahrsicberungszylinder den genannten Auslösedruck, insbesondere dann, wenn das Arbeitsaggregat an ein Hindernis anfährt, kann das in dem Anfahrsicherungszylinder gespeicherte Druckmittel ausströmen bzw. ablaufen, so dass der Anfahrsicherungszylinder seine Länge ändern und das Arbeitsaggregat sich in die Ausweichstellung bewegen kann. Während der Anfahrsicherungszylinder im "Normal"-Betrieb gesperrt ist und das im Anfahrsicherungszylinder gespeicherte Druckmittel nicht abströmen kann, lässt die Überdrucksicherung bei Anfahren an ein Hindernis das Druckmittel ausströmen, wodurch der Anfahrsicherungszylinder beweglich wird.

Vorteilhafterweise ist dabei der Auslösedruck der Überdrucksicherung einstellbar, so dass präzise gesteuert werden kann, wie stark ein Anfahren sein muss, damit das Arbeitsaggregat in seiner Ausweichstellung fahren kann.

Das über die Überdrucksicherung abströmende Druckmittel kann grundsätzlich in verschiedene Kreise gespeist werden, beispielsweise einfach in den Tank zurückgeführt werden. In vorteilhafter Weiterbildung der Erfindung jedoch ist der Überdruckablauf in den Aushubzylinder zurückgeführt, insbesondere in dessen Druckkammer, die bei Druckbeaufschlagung zum Ausheben des Arbeitsaggregats in die Vorgewende- und/oder Transportstellung führt. Dies kann vorteilhafterweise dazu genutzt werden, dass zusätzlich zu der eigentlichen Ausweichbewegung des Arbeitsaggregats, die durch die Bewegung des Anfahrsicherungszylinders ermöglicht wird, auch noch eine Aushubbewegung über den Aushubzylinder erzeugt wird, wodurch ein oftmals noch besseres Ausweichen vor dem Hindernis erreicht wird, da die im Arbeitsbetrieb regelmäßig auftretenden Hindernisse wie Steine, Wurzelstöcke etc. oft eine nur recht begrenzte Höhe besitzen.

Alternativ oder zusätzlich zu der genannten Ausbildung als Druckmittelzylinder kann der genannte oder auch der andere Lenker mit einem seiner Anlenkpunkte verschieblich gelagert sein, bspw. in einem Langloch bzw. einer Langlochführung, wobei der Anlenkpunkt hier bspw. mittels eines Federelements oder auch mittels eines vorgespannten Druckmittelzylinders in eine bestimmte Stellung vorgespannt sein kann. Fährt das Arbeitsaggregat gegen ein Hindernis, kann sich der Anlenkpunkt verschieben und hierdurch die Zusatzbewegung der Tragarmschwenkachse ermöglichen.

Alternativ oder zusätzlich kann der Lenker auch längenveränderbar in Form eines mechanischen Federbeins ausgebildet sein, wie es bspw. an Schwingen von Motorrädern Verwendung findet, wobei das Federbein hier als Zugfeder oder auch als Druckfeder ausgebildet sein kann, je nachdem, wie die Geometrie und Einbaulage der Lenkeranordnung gewählt ist. Vorteilhafterweise kann ein solches mechanisches Federbein, das einen der Lenker der Lenkeranordnung bildet, hinsichtlich seiner Federkraft einstellbar ausgebildet sein, bspw. durch eine Verstelleinrichtung für das Federelement.

Zusätzlich zu dem genannten längenveränderbaren und/oder mit seinem Anlenkpunkt verschieblich gelagerten Lenker kann die Lenkeranordnung einen starren Lenker mit einem festen Anlenkpunkt am Rahmenteil umfassen, sodass die Ausweichbewegung der Tragarmschwenkachse beim Anfahren an ein Hindernis nur durch Längenveränderung bzw. Verschiebung des anderen Lenkers ermöglicht wird, wobei gleichwohl auch der starre Lenker die Ausweichbewegung steuert, insofern als er den möglichen Weg der Tragarmschwenkachse um das Kugelgelenk vorgibt, und zwar insbesondere in Form einer Kreisbahn um den rahmenfesten Anlenkpunkt des genannten starren Lenkers.

Grundsätzlich wäre es zwar auch möglich, dass beide Lenker der Lenkeranordnung längenveränderbar ausgebildet und/oder mit verschieblichen Anlenkpunkten versehen sind, wobei dann vorteilhafterweise bei einem der Lenker der Widerstand gegen Längenveränderung und/oder Verschiebung des Anlenkpunktes vorteilhafterweise deutlich größer als bei dem anderen Lenker gewählt wäre, bspw. durch höheren Vorspanndruck des Druckmittels oder höhere Federkraft. Durch einen solchen unterschiedlichen Widerstand gegen Längung bzw. Verschiebung des Anlenkpunktes kann eine unkontrollierte Ausweichbewegung der Tragarmschwenkachse vermieden und eine definierte Soll-Bewegung beim Anfahren an ein Hindernis erreicht werden. Gleichwohl kann durch nachgiebige Ausbildung beider Lenker eine Anpassung der Ausweichbewegung an verschiedene Hindernisse ermöglicht werden, das heißt bei Bedarf kann das Arbeitsaggregat auch anders ausweichen als für Standardhindernisse vorgesehen.

Insofern muss der vorgenannte "starre" Lenker nicht starr im absoluten Sinne ausgebildet sein, sondern der Term "starr" kann dahingehend verstanden werden, dass er starrer als der längenveränderbare Lenker ausgebildet ist bzw. sein Anlenkpunkt starrer als der Anlenkpunkt des anderen Lenkers fixiert ist, wobei der genannte starrere Lenker gleichwohl eine Längenveränderung bzw. eine Verschiebung seines Anlenkpunktes erfahren kann, wenn auch unter höherem Widerstand als der vorgenannte längenveränderbare bzw. verschiebliche Lenker.

In vorteilhafter Weiterbildung der Erfindung ist die Lenkeranordnung derart ausgebildet, dass bei Auslösen der Anfahrsicherung die Bewegung der Tragarmachse um das Kugelgelenk eine in vertikale Richtung gehende Bewegungskomponente erhält, insbesondere die Tragarmachse ein Stück weit verkippt wird, sodass ein vorderer Abschnitt des Arbeitsaggregats angehoben wird. Insbesondere kann ein vorderer Abschnitt der Tragarmschwenkachse ein Stück weit angehoben und/oder ein in Fahrtrichtung hinterer Abschnitt der Tragarmschwenkachse ein Stück weit abgesenkt werden, um einen vorderen Abschnitt des Arbeitsaggregats bei der Ausweichbewegung ein Stück weit anzuheben. Hier reicht erfahrungsgemäß oft ein nur kleiner Hubbetrag des Arbeitsaggregats, um das Arbeitsaggregat über bodennahe Hindernisse wie Bodenriefen hinwegzuheben.

In Weiterbildung der Erfindung kann der vorgenannte starre Lenker der Lenkeranordnung bzgl. des Kugelgelenks derart angeordnet und ausgerichtet sein, dass beim Auslösen der Anfahrsicherung die Tragarmschwenkachse mit einem in Fahrtrichtung vorderen Abschnitt von dem genannten starren Lenker nach oben gezwungen oder ein in Fahrtrichtung hinterer Abschnitt der Tragarmschwenkachse nach unten gezwungen wird.

In Weiterbildung der Erfindung kann das Kugelgelenk in Fahrtrichtung betrachtet weiter hinten als die Lenkeranordnung angeordnet sein, sodass die Lenker beim Anfahren an ein Hindernis auf Zug beansprucht werden. Hierdurch können übermäßige Beanspruchungen der Lenker auf Knickung vermieden und die Lenker dementsprechend leicht gebaut werden.

Ist das Kugelgelenk in der genannten Weise weiter hinten als die Lenkeranordnung angeordnet, kann der starre Lenker den oberen Lenker der Lenkeranordnung bilden und/oder einen rahmenfesten Anlenkpunkt oberhalb des Kugelgelenks besitzen, sodass der vordere Abschnitt der Tragarmschwenkachse beim Auslösen der Anfahrsicherung leicht nach oben gezogen wird.

In Weiterbildung der Erfindung ist aber auch die umgekehrte Anordnung möglich, das heißt das Kugelgelenk kann weiter vorne als die Lenkeranordnung positioniert sein, wobei in diesem Fall der starre Lenker ebenfalls den oberen Lenker der Lenkeranordnung bilden kann, um das hintere Ende der Tragarmschwenkachse beim Auslösen der Anfahrsicherung leicht nach unten zu drücken und hierdurch einen vorderen Abschnitt des Arbeitsaggregats leicht anzuheben.

In vorteilhafter Weiterbildung der Erfindung können das Kugelgelenk und die Lenkeranordnung den Tragarm unmittelbar an einem festen Rahmenteil des Maschinenrahmens anlenken bzw. die einzige Gelenkstelle des Tragarms relativ zum Maschinenrahmen bilden. In Weiterbildung der Erfindung können das genannte Kugelgelenk und die vorgenannten Lenker Angriffspunkte unmittelbar am Tragarm besitzen. Insbesondere kann ein inneres Ende des Tragarms unmittelbar durch das genannte Kugelgelenk und die genannte Lenkeranordnung am Hauptrahmen der landwirtschaftlichen Maschine gelagert sein. Der genannte Tragarm kann hierbei zwei voneinander beabstandete Lageraugen bzw. Lagerstummel besitzen, an denen das Kugelgelenk und die Lenkeranordnung angreifen.

Die Erfindung wird nachfolgend anhand bevorzugter Ausführungsbeispiele und zugehöriger Zeichnungen näher erläutert. In den Zeichnungen zeigen:
- Fig. 1:: eine schematische, perspektivische Draufsicht auf ein landwirtschaftliches Anbaugerät in Form einer Mähmaschine nach einer vorteilhaften Ausführung der Erfindung in einer Blickrichtung schräg von vorne oben, wobei für den Tragarm, an dem ihr seitlich auskragendes Mähwerk aufgehängt ist, ein Aushubzylinder sowie eine Anfahrsicherung mit einem Anfahrsicherungszylinder vorgesehen ist,
- Fig. 2:: eine schematische, perspektivische Draufsicht auf ein landwirtschaftliches Anbaugerät in Form einer Mähmaschine nach einer vorteilhaften Ausführung der Erfindung in einer Blickrichtung schräg von hinten oben,
- Fig. 3:: eine Draufsicht auf die Gelenklagerung des Tragarms aus den vorhergehenden Figuren in einer nicht-ausgelenkten Stellung der Anfahrsicherung, in der sich die liegende Schwenkachse des Tragarms näherungsweise fahrtrichtungsparallel erstreckt und
- Fig. 4:: eine Draufsicht auf die Gelenklagerung des Tragarms aus den vorhergehenden Figuren in einer ausgelösten Stellung der Anfahrsicherung, in der die liegende Schwenkachse des Tragarms nach hinten geschwenkt und der Anfahrsicherungszylinder gelängt ist.

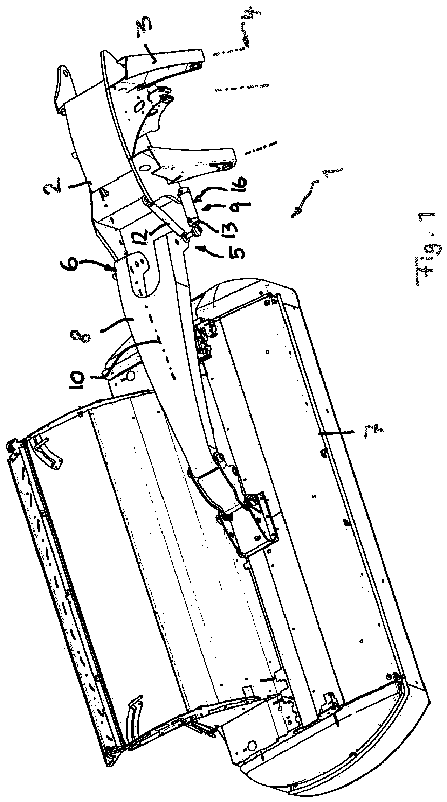

Die in Fig. 1 dargestellte Mähmaschine 1 umfasst einen Rahmen 2, der an einem Anbaubock 3 befestigt ist, der mittels einer an sich üblichen Dreipunktanlenkung 4 an einen Schlepper angebaut werden kann. Es versteht sich jedoch, dass auch andere Anbauvorrichtungen Verwendung finden können, wobei beispielsweise aufgesattelte Rahmen über Deichseln angelenkt sein können.

Das Mähwerk kann zwei seitlich auskragend angeordnete Arbeitsaggregate 7 umfassen, von denen in den Figuren nur eines dargestellt ist, die jeweils an einem auskragenden Tragarm 8 angelenkt sein können, der an dem zuvor genannten Rahmen 2 gelagert ist.

Die Tragarme 8 sind hierbei um liegende, bei nicht-ausgelöster Anfahrsicherung in Fahrtrichtung weisende Tragarmschwenkachsen 11 nach oben verschwenkbar. Zum Ausheben der Tragarme 8 mitsamt den daran angelenkten Arbeitsaggregaten 7 sind zwei Aushubzylinder 10 vorgesehen, die in geeigneter Weise einerseits am Tragarm 8 und andererseits beispielsweise am Rahmen 2 oder einem anderen geeigneten Rahmenteil angelenkt sind.

Die genannte Tragarmachse 11 ist dabei durch eine bewegliche Lagerung 5 in ihrer Raumausrichtung beweglich gelagert, insbesondere derart, dass der Tragarm 8 dann, wenn das Arbeitsaggregat 7 an ein Hindernis anfährt, in Fahrtrichtung nach hinten schwenken kann, wobei hier ggfs. eine leichte Aufwärtsbewegung des Tragarms 8 hinzukommen kann.

Um diese mehrachsige Beweglichkeit zu ermöglichen, kann die genannte Tragarmachse 11 durch ein Kugelgelenk 6 an dem Rahmen 2 angelenkt sein. Das genannte Kugelgelenk 6 würde dabei an sich beliebige räumliche Bewegungen des Tragarms 8 relativ zum Rahmen 2 ermöglichen. Um solche unkontrollierten Tragarmbewegungen zu verhindern, ist der Tragarm 8 zusätzlich zu dem Kugelgelenk 6 mittels einer Lenkeranordnung 9 an dem Rahmen 2 gehalten. Genauer gesagt hält die genannte Lenkeranordnung 9 die Tragarmschwenkachse 11 in einer definierten Lage bzw. lässt die Lenkeranordnung 9 nur bestimmte Bewegungen der Tragarmschwenkachse 11 bzgl. des Kugelgelenks 6 zu.

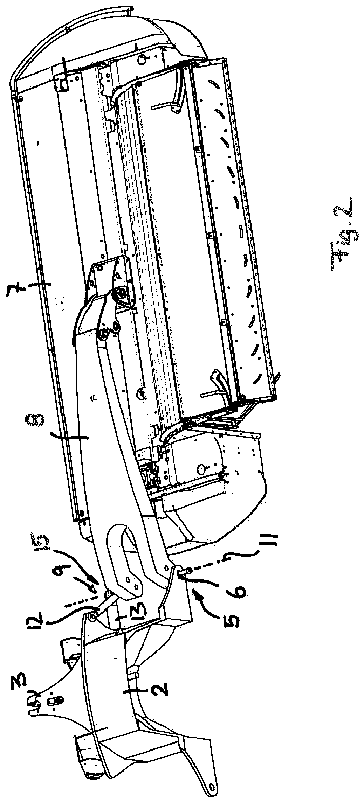

Die genannte Lenkeranordnung 9 umfasst dabei vorteilhafterweise zwei Lenker 12 und 13, die nach Art eines Zweischlags angeordnet sein können, um die Tragarmschwenkachse 11 zu halten. Die beiden Lenker 12 und 13 sind dabei einerseits an voneinander beabstandeten Punkten an dem Rahmen 2 gelenkig, insbesondere schwenkbar angelenkt und andererseits an der genannten Tragarmschwenkachse 11 befestigt, sodass sich der Tragarm 8 um die genannte Tragarmschwenkachse 11 relativ zu den Lenkern 12 und 13 drehen kann. Beispielsweise kann ein Achsstummel am Tragarm 8 schwenkbar an den Lenkerenden der Lenker 12 und 13 befestigt sein. Wie Fig. 1 und 2 zeigen, können die Lenker 12 und 13 in Richtung der Tragarmschwenkachse 11 betrachtet eine v-förmige Anordnung bilden und zum Tragarm 8 hin zusammenlaufen.

Um bei Anfahren an ein Hindernis eine Ausweichbewegung des Tragarms 8 nach hinten zuzulassen, ist einer der Lenker längenveränderbar ausgebildet, sodass der vorgenannte Zweischlag seine Winkelstellung verändern und dementsprechend die Tragarmschwenkachse 11 um den Anlenkpunkt des anderen, vorzugsweise starren Lenkers auf einer Kreisbahn bewegen kann.

Damit die Arbeitsaggregate 7 des Heckmähwerks 8 nicht ungewollt nach hinten schwenken, umfasst die Anfahrsicherung 15 jeweils einen der entsprechenden Anfahrsicherungsachse zugeordneten Anfahrsicherungszylinder 16, der vorteilhafterweise den vorgenannten längenveränderbaren Lenker 13 bildet.

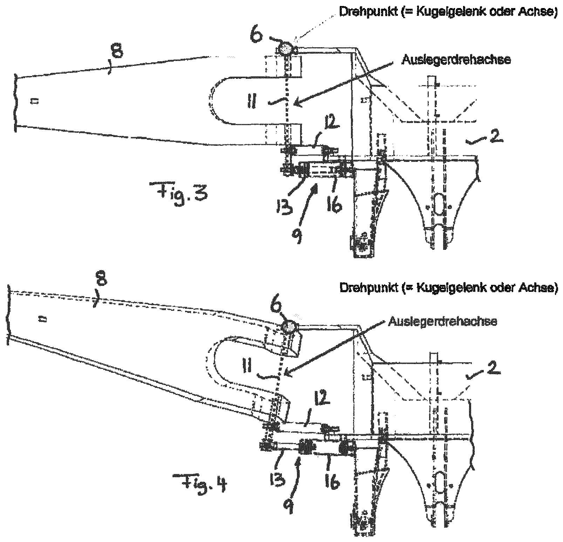

Der genannten Anfahrsicherungszylinder 16 hält dabei das jeweilige Arbeitsaggregat 7 bzw. den zugehörigen Tragarm 8 im normalen Betrieb in der in Fig. 1 gezeigten seitlich quer auskragenden Arbeitsstellung, in der die Tragarmachse 11 etwa fahrtrichtungsparallel liegend ausgerichtet ist. Bei Anfahren an ein Hindernis kann sich der Anfahrsicherungszylinder 16 jedoch in seiner Länge ändern, wobei er sich in der gezeichneten Einbausituation verlängert, um hierdurch ein Zurückschwenken des Arbeitsaggregats 7 in eine Ausweichstellung zu ermöglichen, wobei die Tragarmachse 11 spitzwinklig zur Fahrtrichtung und zur Horizontalen nach außen verkippt, vgl. Fig. 4.

Wie die Fig. 1 und 2 zeigen, kann das Kugelgelenk 6 in Fahrtrichtung betrachtet hinter der Lenkeranordnung 9 angeordnet sein.

Der vorgenannte starre Lenker 12 kann vorteilhafterweise den oberen Lenker der Lenkeranordnung 9 bilden, sodass bei Auslösen der Anfahrsicherung 15, das heißt Längung des Anfahrsicherungszylinders 16, der den anderen Lenker bildet, der vordere Abschnitt des Tragarms 8 bzw. der Tragarmschwenkachse 11 leicht nach oben gezogen wird, wodurch in Folge auch ein vorderer Abschnitt des Arbeitsaggregats leicht nach oben gezogen wird, sodass das Arbeitsaggregat leichter über das Hindernis hinwegkommt.

Wie die Fig. 1 und 2 zeigen, kann die Lenkeranordnung 9 insgesamt betrachtet etwa liegend ausgerichtet sein, insbesondere derart, dass sich die beiden Lenker 12 und 13 in einem spitzen Winkel zur Horizontalen erstrecken.

Der Angriffspunkt der beiden Lenker 12 und 13 am Tragarm 8 kann zumindest näherungsweise auf Höhe des Kugelgelenks 6 liegen. Die rahmenseitigen Anlenkpunkte der Lenkeranordnung 9 können leicht oberhalb und leicht unterhalb des Kugelgelenks 6 liegen. Insbesondere kann zumindest der Anlenkpunkt des starren Lenkers 12 oberhalb des Kugelgelenks 6 positioniert sein.

Die Ausführungsform gemäß den Fig. 1 und 2 zeigt als landwirtschaftliche Maschine eine Mähmaschine bzw. ein Mähwerk, deren Arbeitsaggregate 7 Mähwerkseinheiten, bspw. in Form von Mähtrommeln oder eines Mähbalkens sind. Alternativ kann die landwirtschaftliche Maschine aber bspw. auch als Heuwerbungsmaschine, insbesondere in Form eines Schwaders oder auch eines Zetters ausgebildet sein, deren Arbeitsaggregate in Form von Rechtkreiseln ausgebildet und in entsprechender Weise von einem Tragarm 8 nach oben geschwenkt werden können.

## Patentansprüche

1. Landwirtschaftliche Maschine, vorzugsweise Mähwerk oder Heuwerbungsmaschine, mit zumindest einem Arbeitsaggregat (7), das an einem Tragarm (8) gelagert ist, der um eine liegende Tragarmschwenkachse (11) schwenkbar ist, sodass das Arbeitsaggregat (7) aus einer abgesenkten Arbeitsstellung in eine angehobene Vorgewende- und/oder Transportstellung verbringbar ist, sowie eine Anfahrsicherung (15), mittels derer das Arbeitsaggregat (7) bei Anfahren an ein Hindernis in Fahrtrichtung betrachtet nach hinten und/oder oben in eine Ausweichstellung beweglich ist, wobei die Anfahrsicherung (15) eine bewegliche Lagerung der Tragarmschwenkachse (11) und zumindest ein Sicherungselement zum Halten der Tragarmschwenkachse in der Arbeitsstellung und/oder Sperren der Bewegung in die Ausweichstellung bei hindernisfreiem Normalbetrieb aufweist, **dadurch gekennzeichnet, dass** die bewegliche Lagerung (5) der Tragarmschwenkachse (11) ein Kugelgelenk (6), an dem die Tragarmschwenkachse (11) räumlich frei beweglich gelagert ist, und eine vom Kugelgelenk (6) beabstandete Lenkeranordnung (9) umfasst, die die Bewegung der Tragarmschwenkachse (8) um das Kugelgelenk (6) steuert.

2. Landwirtschaftliche Maschine nach dem vorhergehenden Anspruch, wobei die Lenkeranordnung (9) nach Art eines Zweischlags aufgebaut ist und zumindest zwei Lenker (12, 13) umfasst, von denen zumindest einer längenveränderbar ausgebildet und/oder verschieblich gelagert ist.

3. Landwirtschaftliche Maschine nach dem vorhergehenden Anspruch, wobei der längenveränderbare Lenker (13) als Druckmittelzylinder (16) ausgebildet ist, der an einen Druckmittelkreis zum Vorspannen und/oder Halten des Druckmittelzylinders (16) in einer unausgelösten Normalbetriebsstellung anschließbar ist.

4. Landwirtschaftliche Maschine nach Anspruch 2, wobei der längenveränderbare Lenker (13) als vorzugsweise mechanisches Federbein ausgebildet ist.

5. Landwirtschaftliche Maschine nach einem der vorhergehenden Ansprüche, wobei die Lenkeranordnung (9) einen verschieblichen, mit einer Vorspann- und/oder Federkraft beaufschlagten gelenkigen Lagerpunkt an einem Maschinenrahmenteil und/oder am Tragarm (8) aufweist.

6. Landwirtschaftliche Maschine nach einem der vorhergehenden Ansprüche, wobei die Lenkeranordnung (9) einen starren Lenker (12) mit einem ortsfesten Anlenkpunkt umfasst, der bzgl. des Kugelgelenks (6) derart angeordnet und ausgerichtet ist, dass bei einem Auslösen der Anfahrsicherung (15) die Tragarmschwenkachse (11) mit einem in Fahrtrichtung vorderen Abschnitt von dem genannten starren Lenker (12) nach oben und/oder die Tragarmschwenkachse (11) mit einem in Fahrtrichtung hinteren Abschnitt von dem genannten starren Lenker (12) nach unten gezwungen wird.

7. Landwirtschaftliche Maschine nach einem der vorhergehenden Ansprüche, wobei die Lenkeranordnung (2) jeweils längenveränderbar ausgebildete und/oder verschieblich angelenkte Lenker umfasst, wobei ein Lenker bzgl. einer Längenveränderung und/oder bzgl. einer Verschiebung des Anlenkpunkts einen größeren Widerstand besitzt oder starrer ausgebildet ist als der andere Lenker.

8. Landwirtschaftliche Maschine nach einem der vorhergehenden Ansprüche, wobei das Kugelgelenk (6) in Fahrtrichtung betrachtet weiter hinten angeordnet ist als die Lenkeranordnung (9), deren Lenker (12, 13) beim Anfahren an ein Hindernis auf Zug beansprucht sind.

9. Landwirtschaftliche Maschine nach einem der vorhergehenden Ansprüche, wobei das Kugelgelenk (6) und/oder die Lenkeranordnung (9) Angriffspunkte unmittelbar am Tragarm (8) besitzen und/oder der Tragarm (8) unmittelbar durch das Kugelgelenk (6) und die Lenkeranordnung (9) an einem Maschinenrahmenteil des Hauptrahmens oder des Chassis der landwirtschaftlichen Maschine aufgehängt ist.

10. Landwirtschaftliche Maschine nach einem der vorhergehenden Ansprüche, wobei sie als Mähwerk ausgebildet ist.

11. Landwirtschaftliche Maschine nach einem der Ansprüche 1 bis 9, wobei sie als Heuwerbungsmaschine, insbesondere Schwader oder Zetter, ausgebildet ist.

## Claims

1. An agricultural machine, preferably a cutter or a hay-making machine, having at least one piece of working equipment (7) which is supported at a carrier arm (8) which is pivotable about a horizontal carrier arm pivot axle (11) such that the piece of working equipment (7) can be brought out of a lowered work position into a raised headland position and/or transport position, and a collision protection (15) by means of which the piece of working equipment (7) is movable to the rear and/or upwardly into an escape position viewed in the direction of travel on a driving toward an obstacle, wherein the collision protection (15) has a movable support of the carrier arm pivot axle (11) and at least one securing element for holding the carrier arm pivot axle in the work position and/or for blocking the movement into the escape position in obstacle-free normal operation, **characterized in that** the movable support (5) of the carrier arm pivot axle (11) comprises a ball joint (6) at which the carrier arm pivot axle (11) is supported spatially freely movably and a control arm arrangement (9) which is spaced apart from the ball joint (6) and which controls the movement of the carrier arm pivot axle (8) about the ball joint (6).

2. An agricultural machine in accordance with the preceding claim, wherein the control arm arrangement (9) is designed in the manner of a double crank and comprises at least two control arms (12, 13) of which at least one is length-variable and/or is displaceably supported.

3. An agricultural machine in accordance with the preceding claim, wherein the length-variable control arm (13) is configured as a pressure medium cylinder (16) which can be connected to a pressure medium circuit for preloading and/or holding the pressure medium cylinder (16) in a non-released normal operation position.

4. An agricultural machine in accordance with claim 2, wherein the length-variable control arm (13) is configured as a preferably mechanical strut.

5. An agricultural machine in accordance with one of the preceding claims, wherein the control arm arrangement (9) has a displaceable articulated bearing point at a machine frame part and /or at the carrier arm (8) acted on by a preload force and/or a spring force.

6. An agricultural machine in accordance with one of the preceding claims, wherein the control arm arrangement (9) comprises a rigid control arm (12) having a fixed-position pivot point which is arranged and aligned with respect to the ball joint (6) such that on a release of the collision protection (15), the carrier arm pivot axle (11) is forced upwardly at a section at the front in the direction of travel by the named rigid control arm (12) and/or the carrier arm pivot axle (11) is forced downwardly at a section at the rear in the direction of travel by the named rigid control arm (12).

7. An agricultural machine in accordance with one of the preceding claims, wherein the control arm arrangement (2) comprises respective length-variable and/or displaceably articulated control arms, with a control arm having a larger resistance or being more rigid with respect to a length change and/or with respect to a displacement of the pivot point than the other control arm.

8. An agricultural machine in accordance with one of the preceding claims, wherein the ball joint (6) is arranged further to the rear viewed in the direction of travel than the control arm arrangement (9) whose control arms (12, 13) are tensioned when driving toward an obstacle.

9. An agricultural machine in accordance with one of the preceding claims, wherein the ball joint (6) and/or the control arm arrangement (9) have engagement points directly at the carrier arm (8) and/or the carrier arm (8) is directly suspended by the ball joint (6) and by the control arm arrangement (9) at a machine frame part of the main frame or of the chassis of the agricultural machine.

10. An agricultural machine in accordance with one of the preceding claims, wherein it is configured as a cutter.

11. An agricultural machine in accordance with one of the claims 1 to 9, wherein it is configured as a hay-making machine, in particular as a swather or tedder.

## Revendications

1. Machine agricole, de préférence faucheuse ou faneuse, comprenant au moins un bloc de travail (7), qui est monté sur un bras porteur (8), qui est pivotant sur un axe de pivotement de bras porteur (11) horizontal, de telle sorte que le bloc de travail (7) peut être amené d'une position de travail abaissée à une position de tournière et/ou de transport levée, ainsi qu'une sécurité anticollision (15), au moyen de laquelle le bloc de travail (7) peut être déplacé, vu dans le sens de la marche vers l'arrière et/ou vers le haut, dans une position d'évitement lorsqu'il s'approche d'un obstacle, la sécurité anticollision (15) comportant un montage mobile de l'axe de pivotement de bras porteur (11) et au moins un élément de fixation pour maintenir l'axe de pivotement de bras porteur dans la position de travail et/ou un blocage du mouvement dans la position d'évitement lors du fonctionnement normal sans obstacle, **caractérisé en ce que** le montage mobile (5) de l'axe de pivotement de bras porteur (11) comprend un joint à rotule (6), sur lequel l'axe de pivotement de bras porteur (11) est monté de manière à pouvoir se mouvoir librement dans l'espace, et un agencement de barres directrices (9) espacé du joint à rotule (6), qui commande le mouvement de l'axe de pivotement de bras porteur (8) autour du joint à rotule (6).

2. Machine agricole selon la revendication précédente, dans laquelle l'agencement de barres directrices (9) est construit à la manière d'une liaison à joint double et comprend au moins deux barres directrices (12, 13), dont au moins une est réalisée à longueur variable et/ou est montée mobile.

3. Machine agricole selon la revendication précédente, dans laquelle la barre directrice (13) à longueur variable est réalisée sous la forme d'un vérin à fluide sous pression (16), qui peut être raccordé à un circuit de fluide sous pression pour précontraindre et/ou maintenir le vérin à fluide sous pression (16) dans une position de fonctionnement normale non déclenchée.

4. Machine agricole selon la revendication 2, dans laquelle la barre directrice (13) à longueur variable est réalisée de préférence sous la forme d'une jambe à amortisseur mécanique.

5. Machine agricole selon l'une des revendications précédentes, dans laquelle l'agencement de barres directrices (9) comporte un point de pivotement articulé mobile, soumis à l'action d'une force de précontrainte et/ou de ressort sur une partie de bâti de machine et/ou sur le bras porteur (8).

6. Machine agricole selon l'une des revendications précédentes, dans laquelle l'agencement de barres directrices (9) comprend une barre directrice (12) rigide dotée d'un point d'articulation fixe, qui est disposé et orienté par rapport au joint à rotule (6) de telle manière que, lors d'un déclenchement de la sécurité anticollision (15), l'axe de pivotement de bras porteur (11) est forcé avec une partie avant dans le sens de la marche vers le haut par ladite barre directrice (12) rigide et/ou l'axe de pivotement de bras porteur (11) est forcé avec une partie arrière dans le sens de la marche vers le bas par ladite barre directrice (12) rigide.

7. Machine agricole selon l'une des revendications précédentes, dans laquelle l'agencement de barres directrices (2) comprend des barres directrices respectivement réalisées à longueur variable et/ou articulées de manière mobile, une barre directrice possédant une plus grande résistance en ce qui concerne une modification de la longueur et/ou en ce qui concerne un déplacement du point d'articulation ou étant réalisée plus rigide que l'autre barre directrice.

8. Machine agricole selon l'une des revendications précédentes, dans laquelle le joint à rotule (6), vu dans le sens de la marche, est disposé plus en arrière que l'agencement de barres directrices (9), dont les barres directrices (12, 13) sont sollicitées en traction lors de l'approche d'un obstacle.

9. Machine agricole selon l'une des revendications précédentes, dans laquelle le joint à rotule (6) et/ou l'agencement de barres directrices (9) possèdent des points d'application directement sur le bras porteur (8) et/ou le bras porteur (8) est suspendu directement à une partie de bâti de machine du bâti principal ou du châssis de la machine agricole par le joint à rotule (6) et l'agencement de barres directrices (9).

10. Machine agricole selon l'une des revendications précédentes, celle-ci étant réalisée sous la forme d'une faucheuse.

11. Machine agricole selon l'une des revendications 1 à 9, celle-ci étant réalisée sous la forme d'une faneuse, en particulier d'une andaineuse ou d'un éparpilleur.
